# EUROPEAN PATENT SPECIFICATION

(11) **EP 4 146 431 B1**
(45) Date of publication and mention of the grant of the patent: **25.09.2024**
(21) Application number: 21725718.7
(22) Date of filing: 06.05.2021
(51) Int. Cl.: B23K 26/064

(54) **LASER PROCESSING HEAD AND LASER PROCESSING SYSTEM INCLUDING THE SAME**
LASERBEARBEITUNGSKOPF UND LASERBEARBEITUNGSSYSTEM DAMIT
TÊTE DE TRAITEMENT LASER ET SYSTÈME DE TRAITEMENT LASER LA COMPRENANT

(30) Priority: 07.05.2020 US 202016869119
(43) Date of publication of application: 15.03.2023
(73) Proprietor: Precitec GmbH & Co. KG, 76571 Gaggenau-Bad Rotenfels (DE)
(72) Inventor: RUDOLF, Andreas, 76456 Kuppenheim (DE)
(74) Representative: Ter Meer Steinmeister & Partner
(86) International application number: PCT/EP2021/061971
(87) International publication number: WO 2021/224380

(56) References cited:
- DE-U1- 202017 103 756
- FR-A1- 2 947 918
- JP-A- 2014 083 591
- US-A- 5 837 965

## Description

### FIELD OF THE INVENTION

The present disclosure relates to a laser processing system including a laser processing head, in particular to a laser welding head or a laser cutting head, having a mounting surface for mounting the laser processing head to a carrier.

### BACKGROUND

Generally, a laser processing head for processing a workpiece using a laser beam is mounted at one surface of its housing, a so-called mounting surface, to a carrier of a laser processing system, which supports or moves the laser processing head during laser processing. Within the housing, the laser processing head includes an optical path for the laser beam in which a plurality of optical components are arranged, e.g. for focusing or collimating the laser beam. During processing of a workpiece, splashes of molten material and smoke are generated. The housing protects the optical components and other parts of the laser processing head against dirt particles, such as splashes, dust, dirt and smoke.

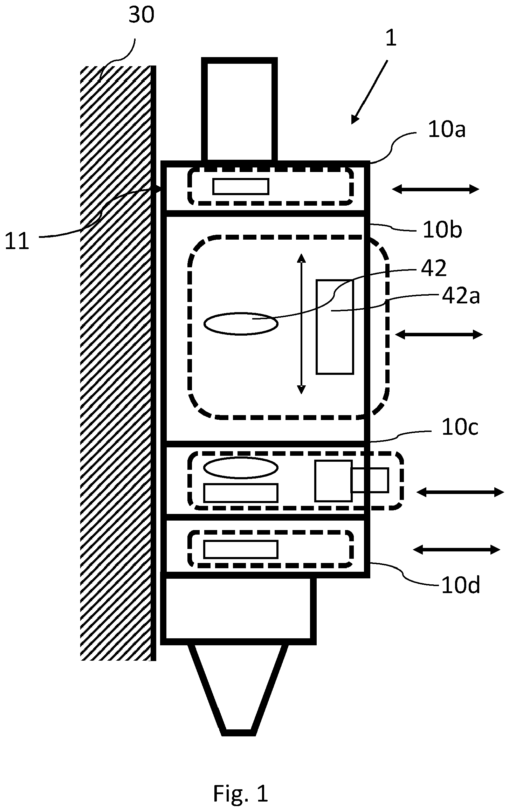

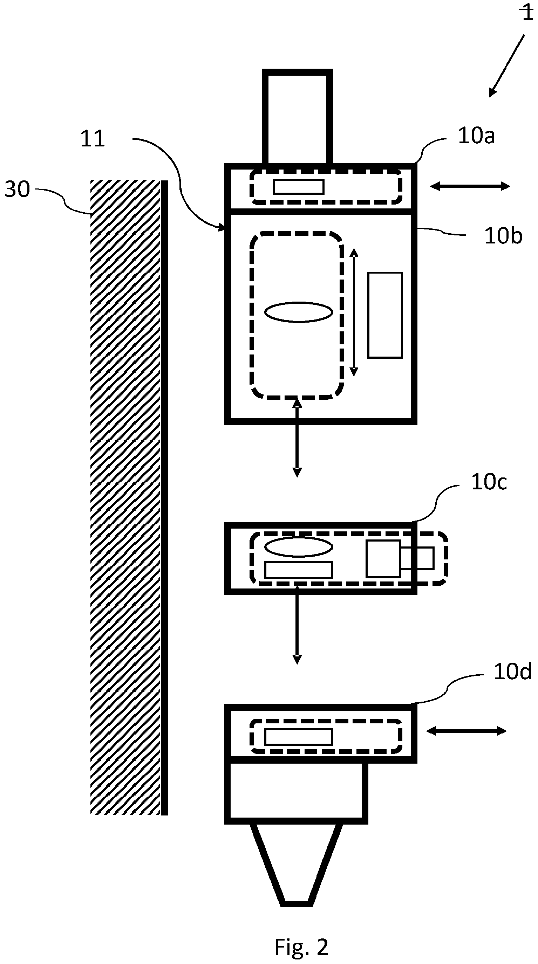

Should optical components get dirty, an access for servicing or changing the optical component is required. Generally, as shown in Figs. 1 and 2, a laser processing head 1 includes a housing 10 with a plurality of horizontal modules 10a, 10b, 10c which include different optical components and are connected to each other in vertical direction. The interfaces between the modules 10a, 10b, 10c are visible and represent potential weak points of sealing. The laser processing head 1 is mounted on a carrier 30 at a mounting surface 11 of its housing 10.

In Fig. 1, horizontal access to the optical components is illustrated (removal direction indicated by the double arrows). Access openings for servicing the optical components, such as collimating or focusing optics, included in the horizontal modules 10a, 10b, 10c are provided either on a front surface, i.e. a surface opposite to the mounting surface 11, or on a lateral surface, i.e. a surface adjacent to the mounting surface 11. The access openings may be covered by corresponding access covers which are screwed to the housing. However, still a considerable amount of dirt particles can enter the housing via the access openings, causing undesired thermal effects and reducing a lifetime of optical components. Moreover, for changing the optical components, it is normally not possible to remove only the optical component, but a larger unit must be removed from the housing. In Figs. 1 and 2, these units are indicated by dotted lines. For instance, as shown in Fig. 1, when changing the collimating optics, the collimating optics 42a must be removed together with a collimating driving unit 42b.

In Fig. 2, a vertical access to the optical components is illustrated. Here, the horizontal modules 10a, 10b, 10c, and 10d have to be disassembled in order to remove the respective optical components therefrom (removal direction indicated by the double arrows). In the configuration illustrated in Fig. 2, some of the optical components may be removed from the housing in horizontal direction, others in vertical direction after disassembling the housing into the respective modules 10a, 10b, 10c, 10d. Thus, access to the optical components inside the laser processing head is typically provided at various sides of the housing, except for the mounting surface of the housing.

However, the interfaces of the modules 10a, 10b, 10c, 10d and the access openings or access covers are heavily soiled by dust, smoke, splashes and the like. Hence, before opening the housing, the interfaces and access openings must be thoroughly cleaned. Yet, a perfect cleaning seems to be impossible. Sometimes, due to the cleaning process, dirt particles are additionally introduced into the housing, e.g. when compressed air is directed to sealings of the interfaces or access openings. Thus, even when access covers or sealings are provided at the interfaces or access openings, the housing is not fully protected from introduction of dirt particles.

Moreover, since the access to the optical components is typically provided on exposed surfaces of the housing, the user often feels invited to directly open the housing in the dirty environment of the laser processing system. Also, it is not intuitive which optical components should be accessed by the user, and which optical components should only be accessed by an experienced service engineer. This may lead to unintentional opening of the laser processing head, with drastic consequences.

Further, due to the many interfaces between the modules and access openings or covers which are visible in the mounted state of the laser processing head, only few areas are available for customized design.

The concept of current laser processing heads is still based on the design of CO2 laser processing heads, where simple, front-side or lateral-side access to the optical components was uncritical and practical. However, laser processing heads using lasers with a wavelength in the range of 400 to 2000 nm are very sensitive for soiled optical components, since this laser wavelength range corresponds to the range of sizes of typical dirt particles. Thus, due to this relation, the dirt particles absorb more laser power than in laser processing heads using CO2 laser having a wavelength of about 10µm. Thus, in times of high-performance fiber lasers, this design of front/lateral-side access is no longer up to date. DE 20 2017 103756 U1 presents system for exchanging optical components in a laser processing head. US 5 837 965 A presents a focusing head of a laser beam provided with a focusing lens for a machine for working metal and non-metal parts. FR 2 947 918 A1 discloses a laser focusing head with cassette for lens. JP 2014 083591 A provides a working head for a laser beam machine.

### SUMMARY OF THE INVENTION

It is an object of the present disclosure to provide a laser processing system including a laser processing head with improved sealing against dirt particles to make sure that optical components remain clean and operational for as long as possible, while still allowing access to the optical components of the laser processing head.

It is another object of the present disclosure to provide a laser processing head with easy and safe access to the optical components for service and replacement.

It is still another object of the present disclosure to provide a laser processing system including a laser processing head ensuring that access to at least some of the optical components is performed by experienced staff.

It is still another object of the present disclosure to provide a laser processing system including a laser processing head with improved outer appearance.

One or more of these objects are solved by a laser processing system according to claim 1. Features of preferred embodiments are subject of the dependent claims.

The laser processing head may be a laser cutting head and/or a laser welding head. If there is a plurality of first optical components, a plurality of access openings may be formed in the mounting surface. A plurality of access openings may be formed in the mounting surface for respectively providing access to at least one first optical component, i.e. for respectively inserting/removing at least one first optical component therethrough. Each first optical component may be removable or insertable through a respective access opening. A respective access opening may be provided for each first component, or more than one first optical component may be accessible through one access opening.

The invention is based on the idea that among the surfaces of the housing of the laser processing head, the mounting surface is least exposed to dirt particles, such as molten material, dust, dirt and smoke. Therefore, by providing the access opening on the mounting surface, an amount of dirt particles entering the housing via the access opening can be reduced. Thus, a sealed state of the housing can be improved, thereby extending a period of use of optical components included in the laser processing head.

The plurality of optical components may define an optical path of the laser processing head, i.e. a path along which a laser beam travels after entering the laser processing head. It is well understood that the first optical component is not necessarily the first optical component along the optical path in propagation direction of the laser beam, but can be any optical component among the optical components arranged within the housing. The optical path may be linear or straight. Alternatively, the optical path for the laser beam may be angled, e.g. by including a mirror for reflecting the laser beam. Each optical component may have an optical axis. The mounting surface may extend in a plane parallel to the optical path of the laser processing head at an entrance point of the laser processing head at which a laser beam can enter the housing and/or the laser processing head, and/or in a plane parallel to the optical path of the laser processing head at an exit point of the laser processing head at which a laser beam can exit the housing and/or the laser processing head. The mounting surface may also extend in a plane parallel to an optical axis of the first component and/or in a plane parallel to an optical axis of a focusing optics included in the optical components.

The housing may form an exterior of the laser processing head. The housing may include several parts or modules which together form the exterior of the laser processing head. The carrier may be a carrier for holding or positioning the laser processing head during laser processing, e.g. a carrier of a laser processing system. That is, e.g. for laser processing, the laser processing head may be mounted on the carrier in a processing position in which the mounting surface is at least partially covered by the carrier.

Further, an access cover may be provided for opening or closing the access opening or at least one of a plurality of the access openings. The access cover may be removably mounted to the housing or to the mounting surface, e.g. by means of screws or the like. The access cover may be part of an optical frame or of a cartridge comprising the first optical component accessible via the respective access opening. Also, in some embodiments, the carrier may be configured to at least partially or fully cover the access opening in the mounted state of the laser processing head. If a plurality of access openings is formed in the mounting surface for respectively providing access to at least one of the first optical components, the access cover may be configured to open or close (i.e. to cover) one or more of the access openings. There may be even one access cover for all access openings. In case that more than one first optical component is accessible through one access opening, said access opening may be opened or closed by more than one access cover. Generally, however, the access cover is not required, as the function of opening or closing the access opening can also be fulfilled by the carrier. In this case, it is preferred that a sealing is provided between the carrier and the mounting surface.

The first optical component may include at least one of: a focusing optics, a focusing lens, a collimating optics, a collimating lens, a protective window, a mirror and a beam shaping optics. The first optical component may be insertable/removable through the access opening in a direction perpendicular to the mounting surface and/or to its optical axis. The first optical component may be mounted on an optical frame or in a cartridge. The optical frame or the cartridge may be coupled or connected to an access cover for opening or closing the corresponding access opening. The cartridge may be a sealed unit including two protective windows with the first optical component inserted therebetween. Thus, the optical frame or cartridge with the first optical component mounted therein may be removable through the access opening. That is, the first optical component may be removed while remaining mounted on the optical frame or cartridge. The access cover may be connected to the first optical component, in particular to the optical frame or cartridge. By these means, the first optical component, or the optical frame or cartridge with the first optical component, can be removed from the laser processing head together with the access cover, thus simplifying the exchange of optical components. The first optical component may be provided in plurality. One or more of the plurality of first optical components may be arranged coaxially to each other, i.e. their respective optical axis may extend coaxially.

The laser processing head may further include a driving unit installed in the housing for moving the first optical component parallel and/or perpendicular to the optical axis of said first optical component. For instance, the first optical component may be a focusing or collimating optics connected to a driving unit for adjusting a position thereof within the housing. The driving unit may include a motor. The driving unit may be a manual driving unit or an automatically or remotely controllable driving unit. In one embodiment, when removing the first optical component through the access opening, the driving unit for moving said first optical component may be configured to remain installed in the housing. For instance, the driving unit for moving said first optical component may be fixedly installed in the housing.

The plurality of optical components may include at least one second optical component, e.g. a protective window. The housing may include a further opening formed in a housing surface other than the mounting surface for removing or inserting the second optical component. Said other housing surface may extend in parallel to the optical path of the laser processing head at an entrance point of the laser processing head at which a laser beam can enter the housing and/or the laser processing head, and/or in a plane parallel to the optical path of the laser processing head at an exit point of the laser processing head at which a laser beam can exit the housing and/or the laser processing head. Said other housing surface may also extend in a plane parallel to an optical axis of the first component and/or in a plane parallel to an optical axis of the second component and/or in a plane parallel to an optical axis of a focusing optics included in the optical components. Said other housing surface may be facing the mounting surface, i.e. may be opposite to the mounting surface, i.e. spaced apart from and/or extending in parallel to the mounting surface. Said other housing surface may be adjacent to the mounting surface and/or extending perpendicular to the mounting surface. For instance, the second optical component may be the last optical component of the laser processing head in propagation direction of the laser beam. In other words, the second optical component may be an optical component, such as a protective window, that is closest to a processing side of the processing head and/or to an exit point where the laser beam exits the housing and/or the laser processing head. The laser processing head may further include a nozzle, and the second optical component may be an optical component, such as a protective window, adjacent or closest to the nozzle. The second optical component may be an optical component closest to an entrance point at which a laser beam enters the housing and/or the laser processing head. The laser processing head may further include a fiber coupler for coupling a laser light guide fiber to the laser processing head, and the second optical component may be a protective window or an optical component adjacent or closest to the fiber coupler.

The mounting surface may include a grounding area for electrical grounding of the laser processing head. The mounting surface may include alignment means, such as alignment pins or holes, for aligning the laser processing head with respect to the carrier. The mounting surface may include fixing means, such as screws, screw holes or bolts, for fixing the laser processing head to the carrier. The mounting surface may include excavated material or an excavation for weight reduction. The mounting surface may include at least one seal surrounding at least one or all of the access openings, e.g. in order to seal between the mounting surface and at least one of the access cover, the recess cover and the mounting cover.

The mounting surface may include a recessed portion in which the at least one access opening is formed. A recess cover for opening or closing the recessed portion at least partially or fully may be removably mounted to the mounting surface. The mounting surface may include a first recessed portion in which the at least one access opening is formed. One or more of the access openings may be removably covered by an access cover. The first recessed portion may be formed in a second recessed portion of the mounting surface. That is, the mounting surface may include two steps, i.e. three different levels. The (first and/or second) recessed portion may extend in a plane parallel to a portion of the mounting surface outside of the recessed portion(s). The recess cover may be configured to open or close the second recessed portion and/or at least one or all of the access covers.

The laser processing head may include a mounting cover for covering the mounting surface. A seal may be provided on the mounting cover and/or on the mounting surface, i.e. between the mounting cover and the mounting surface, when the mounting cover covers the mounting surface. The mounting cover may be hingedly coupled to the mounting surface and may be configured to be mounted on the carrier. That is, the mounting cover may be rotatably or pivotably coupled to the mounting surface, e.g. by at least one hinge unit. A hinge axis or rotation axis of the hinge unit may extend parallel to the mounting surface and/or to the optical path of the laser processing head and/or to the optical axis of the first optical component. By this hinged arrangement, the laser processing head can be rotated with respect to the carrier to expose the mounting surface and the access opening formed therein. Thus, an exchange of the first optical component can be performed without removal of the laser processing head from the carrier. Optical fibers, electrical connections and the like do not have to be disassembled but may remain connected to the laser processing head. Further, this hinged arrangement can be used with a conventional carrier of a laser processing system, since the mounting cover may provide mounting means for mounting the laser processing head to the carrier, in addition to the at least one hinge unit rotatably coupling the mounting cover to the mounting surface.

The mounting cover may have an arbitrary shape. Preferably, however, the mounting cover may have a frame shape for reducing weight. The mounting cover may include fixing means, such as screws, screw holes or bolts, to mount the laser processing head on the carrier.

Optionally, the laser processing head, in particular the mounting surface and/or the mounting cover, may include locking means for locking the laser processing head on the carrier in a processing position in which the mounting surface is at least partially covered by the carrier. The locking means may include a screw, bolt, clamp or latch or the like.

The housing may include at least one housing surface facing the mounting surface, i.e. opposite to the mounting surface, and/or at least one housing surface adjacent to and/or extending perpendicular to the mounting surface, said housing surface forming a continuous or integral or monolithic surface. Here, a continuous surface may mean a surface without openings or interfaces. The housing surface may extend parallel to the mounting surface. Thus, sealing of the housing and its components can be improved. Further, a large area can be provided for other functions, such as for customizing an exterior of the laser processing head, e.g. using decorative adhesive foils, or mounting cables or external devices. Thus, the housing surface may include means for cable guiding and/or mounting means for mounting external devices, such as cameras for process monitoring or displays.

The housing may include at least one housing surface facing the mounting surface, i.e. opposite to the mounting surface. This housing surface may be denoted as front surface of the housing. Lateral surfaces may connect the mounting surface and the front surface. The lateral surfaces may extend in parallel to the optical path of the laser processing head. At least one of the lateral surfaces may be formed as continuous or integral or monolithic surface. The front surface may be shorter than the two lateral surfaces. A gap may be formed between the front surface and a bottom surface of the housing. The bottom surface of the housing may be a housing surface extending perpendicular to the optical path at the exit point of the housing. The gap may be sealed by a transparent material. A LED array may be disposed within the housing adjacent to the gap such that light is emitted by the LED array through the transparent material. By means of the LED array, an operation state of the laser processing head may be indicated, while allowing for an integral or smooth look of the front surface. The LED array may include a plurality of LEDs configured for emitting light of different colors or of the same color.

The laser processing head, in particular its optical components, may be configured for use with a fiber laser and/or for use with a laser beam having a wavelength in the wavelength range of 400 nm to 2000 nm or for use with a laser beam having a wavelength of 970 nm or 1030 nm or 1070 nm, and/or for use with a laser power of at least 2 kW, at least 6 kW, at least 12 kW, at least 20 kW, at least 30 kW, at least 50 kW or at least 70 kW, or with a laser power up to 100 kW.

The laser processing system may include a laser source for providing the laser beam to the laser processing head, e.g. via a light guide fiber. The laser source may be a fiber laser and/or configured to produce a laser beam having a wavelength in the wavelength range of 400 nm to 2000 nm or for use with a laser beam having a wavelength of 970 nm or 1030 nm or 1070 nm, and/or for use with a laser power of at least 2 kW, at least 6 kW, at least 12 kW, at least 20 kW, at least 30 kW, at least 50 kW or at least 70 kW, or with a laser power up to 100 kW.

The carrier may be configured to shield the access cover when the laser processing head is mounted on the carrier and/or in the processing position of the laser processing head. The carrier may block or cover the access cover at least partially. The carrier may be configured to hold or position the laser processing head during laser processing, e.g. with respect to a work piece. The carrier may be mounted on a rail system to move the laser processing head in one direction or in two or three orthogonal directions. In one example, the carrier may include or be a part of a manipulator for moving the laser processing head, such as a robot arm having 2 or more axis, e.g. 6 axes.

The laser processing system may include a laser source for generating a laser power of at least 50 kW or at least 70 kW and/or for generating a laser beam having a wavelength in the range of 400 nm to 2000 nm or having a wavelength of 970 nm or 1030 nm or 1070 nm.

A sealing may be provided between the mounting surface and the carrier. The sealing may be arranged along a circumference or outer edge of the mounting surface. The sealing may surround at least the access opening for sealing the same, in particular in the processing position of the laser processing head.

The mounting surface of the laser processing head may be hingedly coupled to the carrier, e.g. by means of at least one hinge unit. Thus, the laser processing head may be rotatably coupled to the carrier. By these means, the mounting surface and the access opening formed therein which is normally covered or blocked by the carrier can be easily exposed. Optionally, the carrier and/or the laser processing head may include locking means for locking the laser processing head on the carrier in a processing position in which the mounting surface is at least partially covered by the carrier. The locking means may include a screw, bolt, clamp or latch or the like.

The carrier may include a carrier frame mounted to the mounting surface of the laser processing head, the carrier frame exposing the access opening. Hence, the access opening may be directly accessible through the carrier frame.

The carrier may include a fully automated changing device for automatically changing the at least one first optical component.

### BRIEF DESCRIPTION OF THE FIGURES

In the figures:
Fig. 1 is a schematic view of a laser processing head of the related art with horizontal access to optical components;
Fig. 2 is a schematic view of another laser processing head of the related art with horizontal and vertical access to optical components;
Fig. 3A shows a rear view of a laser processing head according to an embodiment of the present disclosure;
Fig. 3B shows a front view of a laser processing head according to an embodiment of the present disclosure;
Fig. 4 A to Fig. 4C show respectively a rear view of a laser processing head according to another embodiment of the present disclosure without access covers, with access covers and with a recess cover;
Fig. 5 shows a lateral view of a laser processing head according to any one of the embodiments shown in Figs. 3A to 4C;
Fig. 6 shows a view of the laser processing head of Fig. 5 mounted to a carrier of a laser processing system;
Fig. 7 shows a view of a laser processing head having a mounting cover hingedly mounted to a carrier of a laser processing system according to another embodiment of the present disclosure;
Fig. 8 shows a view of a laser processing head hingedly mounted to a carrier of a laser processing system according to another embodiment of the present disclosure; and
Fig. 9 shows a view of a laser processing system having a carrier frame and a laser processing head mounted thereto according to another embodiment of the present disclosure.

### DETAILED DESCRIPTION

Throughout this disclosure, same elements are denoted with the same reference signs.

Generally, a laser processing head 1 is mounted to a carrier 30 of a laser processing system at a mounting surface 11 of a housing 10 of the laser processing head 1. In the related art, the mounting surface 11 has almost no other functions besides this mounting function. Although in the figures and in the detailed description, it is referred to a laser processing head having a linear optical path for the laser beam, the disclosure is also applicable to a laser processing head having a bent or angled optical path for the laser beam, e.g. due to a mirror or a beam splitter. Likewise, although in the figures and in the detailed description, it is referred to a laser processing head having a fiber coupler, the laser processing head can also have other coupling means for coupling a laser beam into the laser processing head at the entrance point of the laser processing head.

According to the present disclosure, the inventors have noted that the mounting surface 11 is the surface of the housing 10 that is best protected against dirt since it is at least partially or even completely covered by the carrier in the mounted state, i.e. during processing. Thus, the mounting surface 11 is selected for providing access openings to the optical components of the laser processing head. By moving the access openings from other surfaces of the housing to the mounting surface 11, the tightness of the housing 10 against dirt particles can be improved. Moreover, at least one of the other surfaces of the housing 10 besides the mounting surface 11 can be designed as integral surfaces, i.e. without gaps, interfaces or openings, thereby improving an outer appearance. In addition, this increases the confidence of a user in the tightness of the laser processing head against dirt particles. The other surfaces may also be used for other functions. For instance, means for cable routing, a camera for monitoring the laser processing or a display may be mounted at one or more of these other surfaces.

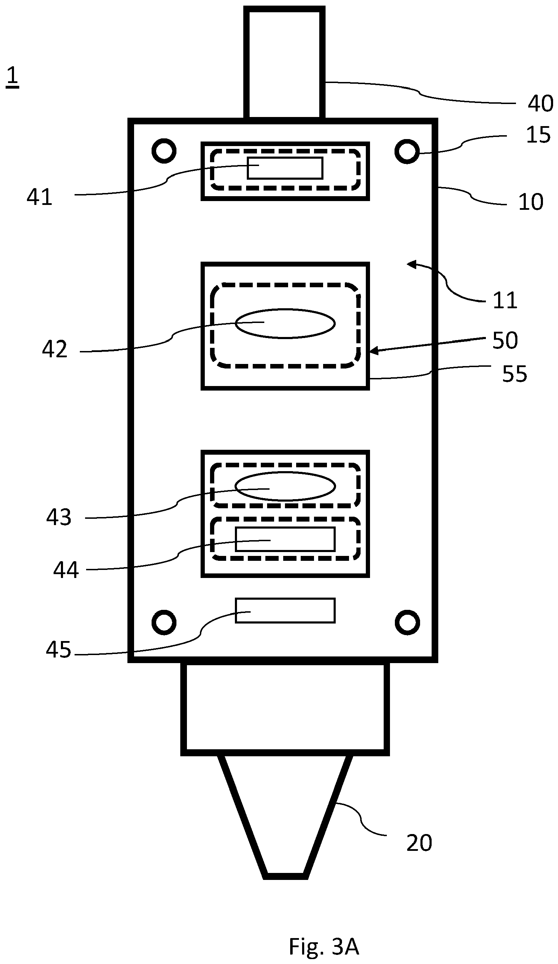

In Fig. 3A, a rear view of a laser processing head 1 according to the present disclosure is shown. That is, the mounting surface 11, which may also be referred to as a rear surface of the housing 10, is shown. The laser processing head 1 includes several optical components arranged in an optical path within the housing 10. For instance, the optical components may include a first protective window 41, a collimating optics 42, a focusing optics 43, and a second protective window 45. The first protective window 41 may be the first optical element in the optical path of the laser processing head, i.e. along the laser beam propagation direction. That is, the first protective window 41 may be the optical component closest to a fiber coupler or entrance point 40 of the laser processing head. Similarly, the second protective window 45 may be the last optical element in the optical path of the laser processing head, i.e. along the laser beam propagation direction. That is, the second protective window 45 may be the optical component of the laser processing head that is closest to a nozzle 20 of the laser processing head or to an exit point of the laser processing head. Of course, the laser processing head 1 may include additional protective windows, which may be arranged between the first protective window 41 and the second protective window 45. Also, the laser processing head 1 may include only one protective window, i.e. either window 41 or window 45. Although the focusing optics 43 and the collimating optics 42 are respectively illustrated as a lens, the focusing optics 43 and the collimating optics 42 may respectively include a lens, a group of lenses, a lens module and the like. Optionally, a further optical component 44 may be provided which can be another protective window or a beam splitter or the like. One or more of the optical components may be mounted on an optical frame and/or in a cartridge. Here, the cartridge may include at least two protective windows disposed on either side of the respective optical component, such as the collimating optics 42 or the focusing optics 43.

For at least some of these optical components of the laser processing head, an access opening 50 for servicing or replacing the respective optical component is provided on the mounting surface 11. The access opening 50 may be covered by an access cover 55. However, the access cover 55 is not mandatory. The access opening may be covered by the carrier 30 or by a recess cover 115 (described below) or a mounting cover 60 (described below). When removing the access cover 55 from the mounting surface 11, the access opening 50 is exposed and the respective at least one optical component is accessible, e.g. for servicing or replacement. In the example illustrated in Fig. 3A, the focusing optics 43 and the optical component 44 can be accessed via the same access opening 50. However, an individual access opening 50 may be provided for each of the optical components separately. Likewise, the access cover 55 may cover only one access opening 50 or several access openings 50.

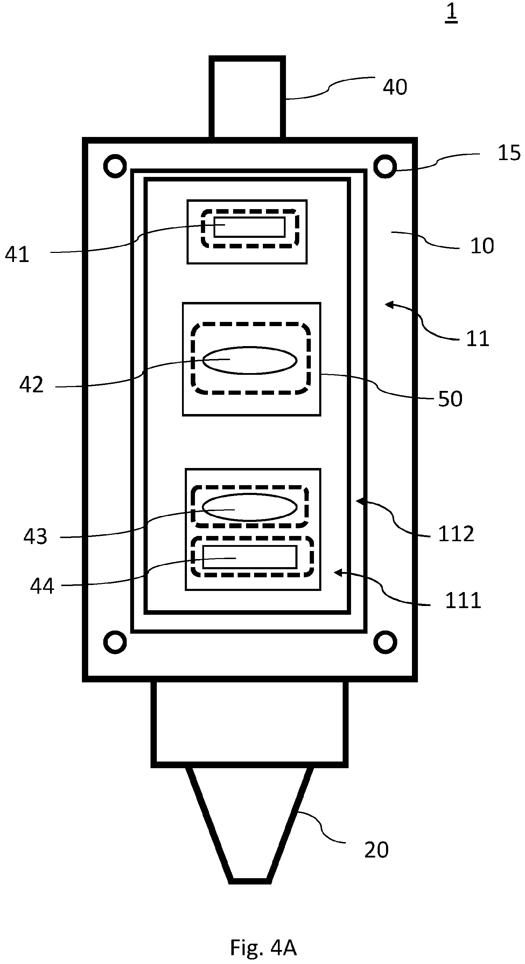

As shown in Fig. 3A, fixing means 15, such as screw holes, screws or bolts, may be provided additionally on the mounting surface 11 in order to mount the laser processing head 1 to the carrier 30. Also, alignment means (not shown), such as pin holes and/or pins, may be provided on the mounting surface 11 for accurately and reproducibly aligning the laser processing head 1 with respect to the carrier 30. Further, the mounting surface 11 may include a grounding area for electrical grounding of the laser processing head 1. In order to reduce weight, the mounting surface 11 may be excavated, e.g. by including one or more recessed portions as described below with respect to Figs. 4A to 4C.

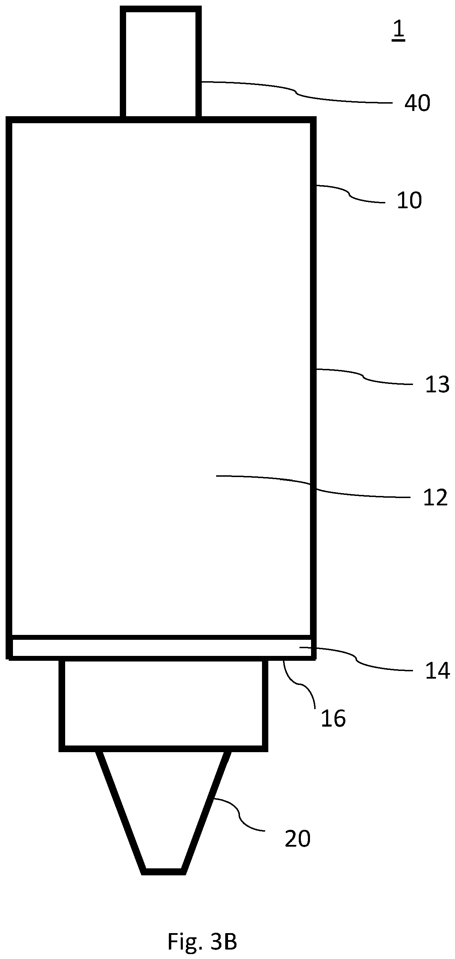

Fig. 3B shows a front view of a laser processing head 1 according to an embodiment of the present invention. The front surface 12, i.e. the housing surface opposite to or facing the mounting surface 11, has an integral or uniform appearance. Alternatively or additionally, lateral surfaces 13 of the housing connecting the front surface 12 and the mounting surface 11 and extending parallel to the optical path of the laser processing head may have a uniform or integral appearance. The front surface 12 may extend less far towards a bottom surface 16 of the housing 10 than the lateral surfaces 13 in order to form a gap 14 between the bottom surface 16 and the front surface 12. The gap 14 may be sealed by acrylic glass or another transparent material. Behind the gap, a LED array may be disposed in order to indicate an operating state of the laser processing head 1.

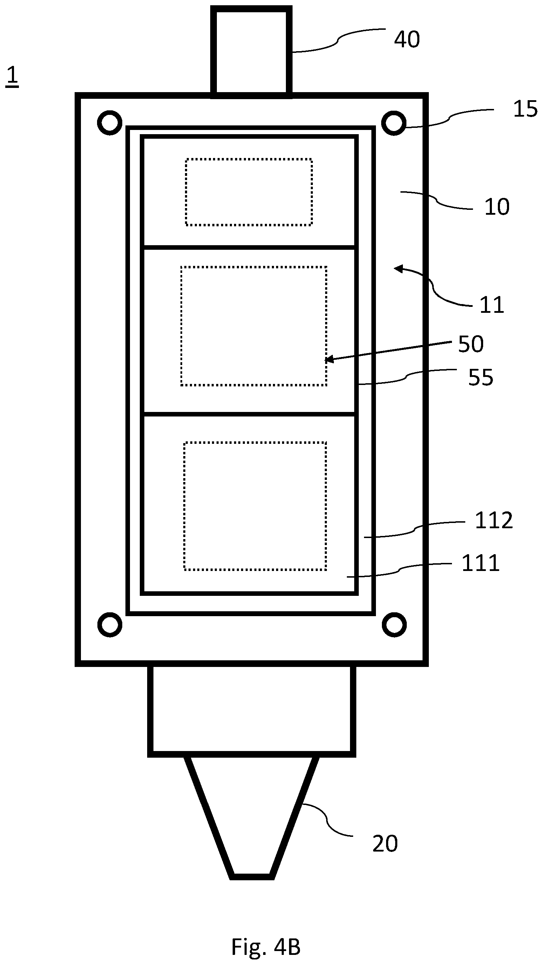

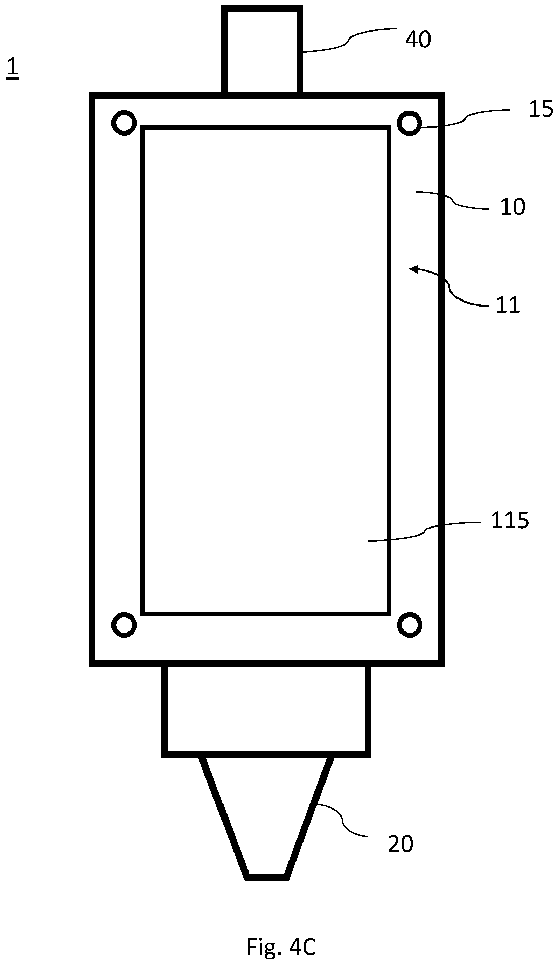

In Figs. 4A to 4C, a rear view of a laser processing head 1 according to another embodiment is shown. Most of the parts are identical to those of the embodiment shown in Fig. 3A. Thus, a detailed description thereof is omitted. In the embodiment shown in Figs. 4A to 4C, the mounting surface 11 is recessed. In the example shown, the mounting surface 11 includes a first recessed portion 111 in which one or more of the access openings 50 are formed, and a second recessed portion 112 in which the first recessed portion 111 is formed. The recessed portions may be recessed towards an inside of the housing 10. In other words, the mounting surface 11 may include three different levels or two steps. However, the second recessed portion 112 is not required, i.e. the mounting surface 11 may also include only the first recessed portion 111, i.e. only one step. By recessing the mounting surface 11, weight of the housing can be reduced. Alternatively or additionally, as shown in Fig. 4B, the first recessed portion 111 may serve as seat area for one or more access covers 55. In this case, as shown in Fig. 4B, the first recessed portion 111 may be covered or filled or closed by the access covers 55. That is, the access covers 55 may have the same width and/or the same thickness as the first recessed portion 111 in order to fill the first recessed portion 111 completely, or in order to achieve a stepless surface of the mounting surface 11 and the access covers 55 when the access covers 55 are closing the respective access openings 50. In Fig. 4C, the second recessed portion 112 is covered or filled or closed by a recess cover 115. Here, the recess cover 115 has the same width and the same thickness as the second recessed portion 112 in order to fill the second recessed portion 112 completely and to achieve a stepless surface of the mounting surface 11 and the recess cover 115 when the recess cover 115 is mounted. The stepless surface may improve the appearance.

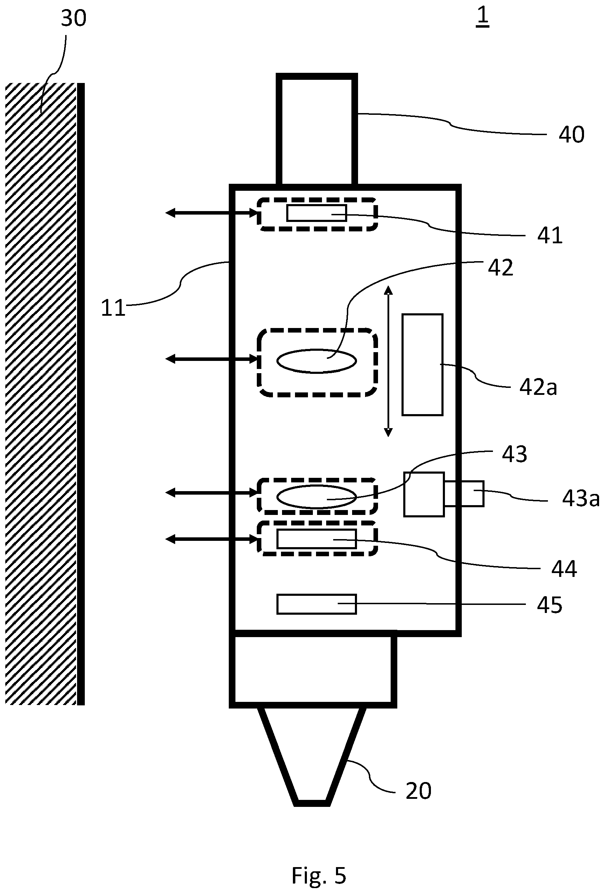

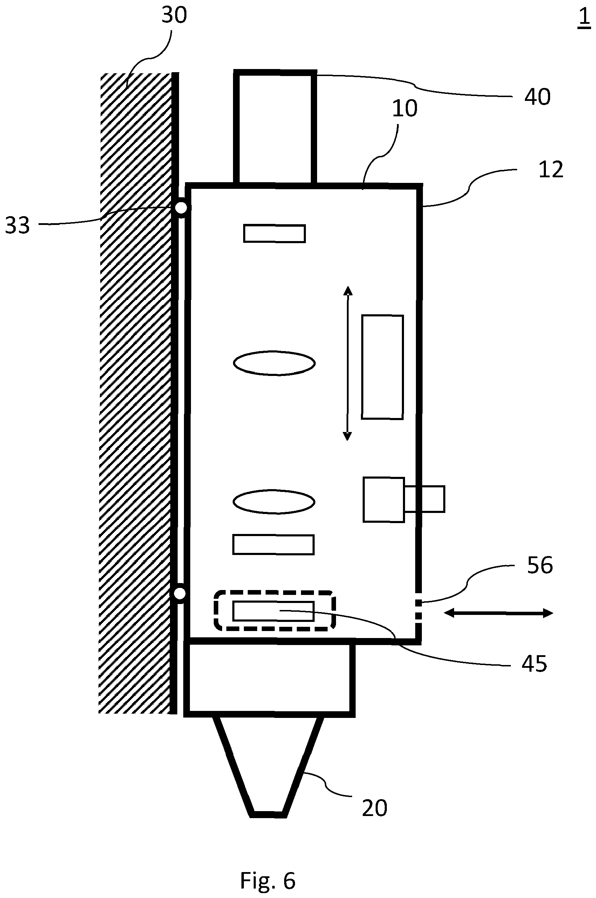

In Figs. 5 and 6, lateral views of the laser processing head 1 according to any one of the embodiments shown in Figs. 3A to 4C are shown. In fig. 5, the laser processing head 1 has been removed from the carrier 30. The double-arrows indicate the direction along which replacement of the optical components may be performed. As one can see, the replacement is performed in horizontal direction via the access openings 50 on the mounting surface 11, i.e. in a direction perpendicular to the optical axis of the optical components or perpendicular to the mounting surface 11. The dotted lines indicate the units which are removed from the housing 10. In particular, the collimating optics 42 may be removed from the housing, while a driving unit 42a for moving the collimating optics 42 along its optical axis (arrow) and/or perpendicular thereto (not shown) may stay in place. Likewise, the focusing optics 43 may be removed without removing a driving unit 43a for moving the focusing optics 43 along its optical axis and/or perpendicular thereto (not shown).

Most of the optical components do not need to be accessed during normal operation. By providing the access openings 50 for these optical components at the mounting surface 11 on the rear side of the laser processing head 1, the access openings 50 and the optical components can be protected against dirt and allow clean servicing thereof. Here, clean access is more important than servicing time. In order to improve the tightness against dirt, a sealing 33 may be provided between the mounting surface 11 and the carrier 30, as shown in Fig. 6. Preferably, the sealing 33 surrounds all access openings 50 or access covers 55. Alternatively, a plurality of sealings 33 may be provided respectively surrounding one of the access openings 50 on the mounting surface 11. By providing the access openings 50 for the optical components on the mounting surface 11, the access openings 50 are not visible during normal operation. Moreover, the access openings 50 are protected against unauthorized access by a normal user. Also, sealing(s) may be provided between the mounting surface 11 and the access cover(s) 55.

The second protective window 45, however, may not be accessible via the mounting surface 11. The second protective window 45 is a wear part and has to be checked and replaced regularly during normal operation. Therefore, as shown in Fig. 6, the second protective window 45 may be accessible via a further opening 56 on the housing surface 12 opposite to the mounting surface 11, i.e. via the front surface of the housing 10. By these means, the access can be easily performed by a user. Yet, the present invention is not limited to this, but the second protective window 45 may also be accessible via the mounting surface 11. Although the first protective window 41 is shown to be accessible via the mounting surface 11 in Figs. 5 and 6, it may also be accessible via the front surface 12 like the second protective window 45. This is in particular useful, in case that the laser processing head includes the fiber coupler 40.

According to further embodiments of the present disclosure, the accessibility of the mounting surface 11 is improved for experienced staff by rotatably connecting the laser processing head 1 with the carrier 30 using one or more hinge units. Preferably, the laser processing head 1 may be rotatable about at least 90° with respect to the carrier 30. The rotation axis may be vertical. In other words, the rotation axis may extend parallel to the optical path of the laser processing head, i.e. parallel to the mounting surface 11. The laser processing head 1 may further include locking means for locking the laser processing head 1 in a processing position, i.e. for blocking any rotating movement about the hinge units. The blocking means may be a latch mechanism or the like.

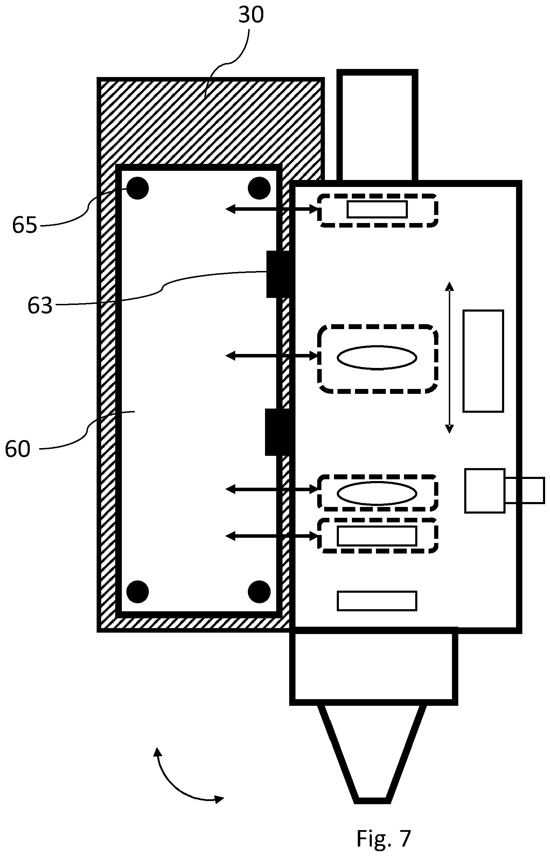

In one embodiment, as shown in Fig. 7, the laser processing head 1 is provided with a mounting cover 60 that is hinged to the mounting surface 11 of the housing 10 by at least one hinge unit 63. The hinge unit 63 may allow a rotation of at least 90°. The mounting cover 60 is mountable to a carrier 30 of a laser processing system by fixing means 65, such as screws or bolts. Thus, the laser processing head 1 is rotatable with respect to the mounting cover 60, or with respect to the carrier 30, about a rotation axis of the hinge unit 63.

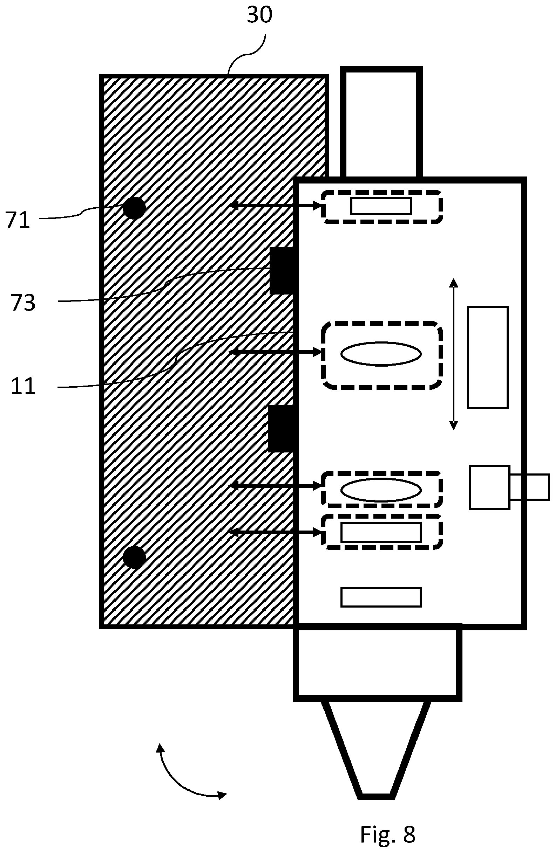

In another embodiment, shown in Fig. 8, at least one hinge unit 73 is provided on the mounting surface 11 to be hinged to the carrier 30. Thus, the laser processing head 1 can be rotatably coupled to the carrier 30 directly at its mounting surface 11. For fixing the laser processing head 1 in the processing position at the carrier 30, locking means, such as screws and screw holes, a latch assembly, a snapping mechanism or the like, may be provided at the carrier 30 and/or at the laser processing head 1. In Fig. 8, screw holes 71 are exemplarily shown at the carrier 30 for fixing the laser processing head in the processing position at the carrier 30 by screws. The corresponding screw holes in the processing head 1 are not shown.

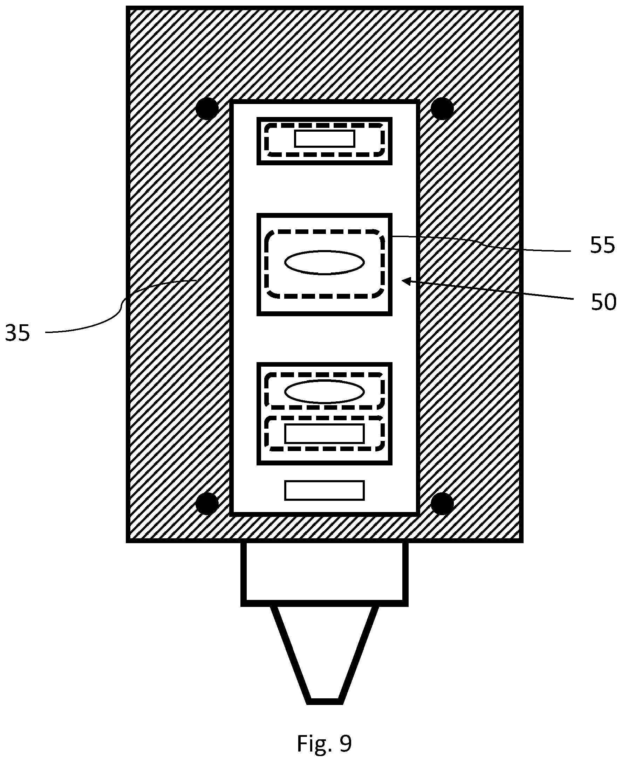

According to further embodiments of the present disclosure, the accessibility of the mounting surface 11 is improved by the carrier 30 including a carrier frame 35. As shown in Fig. 9, the carrier frame 33 has a frame shape with an opening in the center. The mounting surface 11 of the laser processing head 1 is mounted to the carrier frame 33 such that the access covers 55 are exposed through the carrier fame 35. Preferably, the carrier frame 35 surrounds all access covers 55 on the mounting surface 11 of the laser processing head. A sealing 33 may be provided between the carrier frame 35 and the mounting surface 11, as mentioned earlier. By these means, the access openings 50 can be used for service of the optical components, without dismounting the laser processing head 1 from the carrier 30 or rotating the laser processing head 1 with respect to the carrier 30. This improves both easy access and mounting stability of the laser processing head on the carrier.

The carrier 30 or the carrier frame 33 may include an assistance device which is configured to assist in releasing or guiding removal of the optical components. Alternatively, the carrier 30 or the carrier frame 33 may include an automated changing device for changing the optical components. The changing device may include a driving unit or motor as well as replacement components for each optical component. This allows a remotely controlled and fully automated change of the optical components.

According to the present disclosure, access openings are moved to a rear surface or mounting surface 11 of the laser processing head 1. Thus, the access openings disappear from view of a user. On the one hand, this improves the tightness of the laser processing head against dirt particles, on the other hand, this improves the outer appearance and allows for customized design, e.g. using large 3D adhesive films covering several surfaces of the housing.

## Claims

1. A laser processing system, comprising: a laser processing head (1), and a carrier (30) to which the laser processing head (1) is mounted;
the laser processing head (1) comprising:
a housing (10) including a mounting surface (11) for mounting the laser processing head (1) on the carrier (30);
a plurality of optical components (41, 42, 43, 44, 45) arranged within the housing (10); and
an access opening (50) for removing or inserting at least one first optical component (41, 42, 43, 44) among the optical components (41, 42, 43, 44, 45);
**characterized in that**
the access opening (50) is formed in the mounting surface (11) of the housing (10), and
wherein in a mounted state of the laser processing head (1), the carrier (30) covers the access opening (50).

2. The laser processing system of claim 1, wherein the plurality of optical components (41, 42, 43, 44, 45) includes at least one second optical component (45), and
wherein a further opening (56) for removing or inserting the second optical component (45) is formed in a housing surface (12) of the housing (10), wherein the housing surface (12) extends perpendicular to the mounting surface (11) or is opposite to the mounting surface (11).

3. The laser processing system of claim 2, wherein the laser processing head (1) further includes:
a nozzle (20), wherein the second optical component (45) is a protective window adjacent to the nozzle (20) or is an optical component closest to the nozzle (20); and/or
a fiber coupler (40) for coupling a laser light guide fiber to the laser processing head (1), wherein the second optical component (45) is a protective window adjacent to the fiber coupler (40) or is an optical component closest to the fiber coupler (40).

4. The laser processing system of claim 2 or 3, wherein the second optical component (45) is an optical component closest to an entrance point for allowing a laser beam to enter into the housing (10), and/or is an optical component closest to an exit point for allowing a laser beam to exit from the housing (10).

5. The laser processing system according to any one of the preceding claims, wherein the at least one first optical component (41, 42, 43, 44) includes at least one of: a focusing optics (45), a focusing lens, a collimating optics (42), a collimating lens, a protective window (41), a mirror and a beam shaping optics.

6. The laser processing system according to any one of the preceding claims, the laser processing head (1) further including:
a driving unit (42a, 43a) installed at the housing (10) for moving the first optical component (42, 43) parallel and/or perpendicular to an optical axis of said first optical component (42, 43), and
wherein the driving unit (42a, 43a) is configured to remain installed at the housing (10) when removing the first optical component (42, 43) through the access opening (50).

7. The laser processing system according to any one of the preceding claims,
wherein the mounting surface (11) extends in a plane parallel to an optical path of the laser processing head (1) at an entrance point for allowing a laser beam to enter into the housing (10); and/or
wherein the mounting surface (11) extends in a plane parallel to an optical path of the laser processing head (1) at an exit point for allowing a laser beam to exit from the housing (10); and/or
wherein the mounting surface (11) extends in a plane parallel to an optical axis of the first optical component (41, 42, 43, 44).

8. The laser processing system according to any one of the preceding claims, wherein the mounting surface (11) includes:
alignment means for aligning the laser processing head (1) with respect to the carrier (30); and/or
fixing means (15) for fixing the laser processing head (1) to the carrier (30).

9. The laser processing system according to any one of the preceding claims, wherein at least one housing surface (12) opposite to the mounting surface (11) and/or at least one housing surface (12) adjacent to and/or extending perpendicular to the mounting surface (11) is a continuous surface.

10. The laser processing system according to any one of the preceding claims, the laser processing head (1) further comprising:
an access cover (55) for opening or closing the access opening (50), the access cover (55) being removably mounted to the housing (10).

11. The laser processing system according to claim 10, wherein the access cover (55) is part of an optical frame or of a cartridge comprising the first optical component (41, 42, 43, 44) which is accessible via said access opening (50).

12. The laser processing system according to any one of the preceding claims,
wherein the mounting surface (11) comprises a recessed portion (111, 112), in which the access opening (50) is formed, the laser processing head (1) further comprising a recess cover (115) for opening or closing the recessed portion (111, 112), and/or
wherein the laser processing head (1) further comprises a mounting cover (60) hingedly coupled to the mounting surface (11), the mounting cover (60) including fixing means (65) for fixing the laser processing head (1) to the carrier (30).

13. The laser processing system of any one of the preceding claims, further including a sealing (33) between the mounting surface (11) and the carrier (30).

## Patentansprüche

1. Laserbearbeitungssystem, das umfasst: einen Laserbearbeitungskopf (1) und einen Träger (30), an dem der Laserbearbeitungskopf (1) montiert ist;
wobei der Laserbearbeitungskopf (1) umfasst:
ein Gehäuse (10), das eine Montagefläche (11) zum Montieren des Laserbearbeitungskopfes (1) an dem Träger (30) aufweist;
mehrere optische Komponenten (41, 42, 43, 44, 45), die innerhalb des Gehäuses (10) angeordnet sind; und
eine Zugangsöffnung (50) zum Entfernen oder Einsetzen von mindestens einer ersten optischen Komponente (41, 42, 43, 44) unter den optischen Komponenten (41, 42, 43, 44, 45);
**dadurch gekennzeichnet, dass**
die Zugangsöffnung (50) in der Montagefläche (11) des Gehäuses (10) ausgebildet ist, und
wobei in einem montierten Zustand des Laserbearbeitungskopfes (1) der Träger (30) die Zugangsöffnung (50) abdeckt.

2. Laserbearbeitungssystem nach Anspruch 1, wobei die mehreren optischen Komponenten (41, 42, 43, 44, 45) mindestens eine zweite optische Komponente (45) umfassen, und
wobei eine weitere Öffnung (56) zum Entfernen oder Einsetzen der zweiten optischen Komponente (45) in einer Gehäusefläche (12) des Gehäuses (10) ausgebildet ist, wobei sich die Gehäusefläche (12) senkrecht zu der Montagefläche (11) erstreckt oder der Montagefläche (11) gegenüberliegt.

3. Laserbearbeitungssystem nach Anspruch 2, wobei der Laserbearbeitungskopf (1) ferner umfasst:
eine Düse (20), wobei die zweite optische Komponente (45) ein Schutzfenster, das zu der Düse (20) benachbart ist, oder eine optische Komponente, die der Düse (20) am nächsten liegt, ist; und/oder
einen Faserkoppler (40) zum Koppeln einer Laserlichtleitfaser mit dem Laserbearbeitungskopf (1), wobei die zweite optische Komponente (45) ein Schutzfenster, das zu dem Faserkoppler (40) benachbart ist, oder eine optische Komponente, die dem Faserkoppler (40) am nächsten liegt, ist.

4. Laserbearbeitungssystem nach Anspruch 2 oder 3, wobei die zweite optische Komponente (45) eine optische Komponente ist, die einem Eintrittspunkt zum Ermöglichen des Eintritts eines Laserstrahls in das Gehäuse (10) am nächsten liegt, und/oder eine optische Komponente ist, die einem Austrittspunkt zum Ermöglichen des Austritts eines Laserstrahls in das Gehäuse (10) am nächsten liegt.

5. Laserbearbeitungssystem nach einem der vorhergehenden Ansprüche, wobei die mindestens eine erste optische Komponente (41, 42, 43, 44) mindestens eines der folgenden Elemente umfasst: eine Fokussieroptik (45), eine Fokussierlinse, eine Kollimationsoptik (42), eine Kollimationslinse, ein Schutzfenster (41), einen Spiegel und eine Strahlformungsoptik

6. Laserbearbeitungssystem nach einem der vorhergehenden Ansprüche, wobei der Laserbearbeitungskopf (1) ferner umfasst:
eine an dem Gehäuse (10) installierte Antriebseinheit (42a, 43a) zum Bewegen der ersten optischen Komponente (42, 43) parallel und/oder senkrecht zu einer optischen Achse der ersten optischen Komponente (42, 43), und
wobei die Antriebseinheit (42a, 43a) so ausgelegt ist, dass sie an dem Gehäuse (10) installiert bleibt, wenn die erste optische Komponente (42, 43) durch die Zugangsöffnung (50) entfernt wird.

7. Laserbearbeitungssystem nach einem der vorhergehenden Ansprüche,
wobei sich die Montagefläche (11) in einer Ebene parallel zu einem optischen Pfad des Laserbearbeitungskopfes (1) an einem Eintrittspunkt zum Ermöglichen des Eintritts eines Laserstrahls in das Gehäuse (10) erstreckt, und/oder
wobei sich die Montagefläche (11) in einer Ebene parallel zu einem optischen Pfad des Laserbearbeitungskopfes (1) an einem Austrittspunkt zum Ermöglichen des Austritts eines Laserstrahls aus dem Gehäuse (10) erstreckt; und/oder
wobei sich die Montagefläche (11) in einer Ebene parallel zu einer optischen Achse der ersten optischen Komponente (41, 42, 43, 44) erstreckt.

8. Laserbearbeitungssystem nach einem der vorhergehenden Ansprüche, wobei die Montagefläche (11) aufweist:
Ausrichtungsmittel zum Ausrichten des Laserbearbeitungskopfes (1) in Bezug auf den Träger (30); und/oder
Fixierungsmittel (15) zum Fixieren des Laserbearbeitungskopfes (1) an dem Träger (30).

9. Laserbearbeitungssystem nach einem der vorhergehenden Ansprüche, wobei mindestens eine Gehäusefläche (12) gegenüber der Montagefläche (11) und/oder mindestens eine Gehäusefläche (12), die zu der Montagefläche (11) benachbart ist und/oder sich senkrecht zu dieser erstreckt, eine kontinuierliche Oberfläche ist.

10. Laserbearbeitungssystem nach einem der vorhergehenden Ansprüche, wobei der Laserbearbeitungskopf (1) ferner umfasst:
eine Zugangsabdeckung (55) zum Öffnen oder Schließen der Zugangsöffnung (50), wobei die Zugangsabdeckung (55) abnehmbar an dem Gehäuse (10) montiert ist.

11. Laserbearbeitungssystem nach Anspruch 10, wobei die Zugangsabdeckung (55) Teil eines optischen Rahmens oder einer Kartusche ist, die die erste optische Komponente (41, 42, 43, 44) umfasst, die über die Zugangsöffnung (50) zugänglich ist.

12. Laserbearbeitungssystem nach einem der vorhergehenden Ansprüche,
wobei die Montagefläche (11) einen ausgesparten Abschnitt (111, 112) aufweist, in dem die Zugangsöffnung (50) ausgebildet ist, wobei der Laserbearbeitungskopf (1) ferner eine Aussparungsabdeckung (115) zum Öffnen oder Schließen des ausgesparten Abschnitts (111, 112) aufweist, und/oder
wobei der Laserbearbeitungskopf (1) ferner eine Montageabdeckung (60) aufweist, die scharnierartig mit der Montagefläche (11) verbunden ist, wobei die Montageabdeckung (60) Fixierungsmittel (65) zum Fixieren des Laserbearbeitungskopfs (1) an dem Träger (30) aufweist.

13. Laserbearbeitungssystem nach einem der vorhergehenden Ansprüche, das ferner eine Dichtung (33) zwischen der Montagefläche (11) und dem Träger (30) aufweist.

## Revendications

1. Système de traitement au laser, comportant : une tête de traitement au laser (1), et un support (30) sur lequel la tête de traitement au laser (1) est montée ;
la tête de traitement au laser (1) comportant :
un boîtier (10) incluant une surface de montage (11) pour monter la tête de traitement au laser (1) sur le support (30) ;
une pluralité de composants optiques (41, 42, 43, 44, 45) agencés à l'intérieur du boîtier (10) ; et
une ouverture d'accès (50) pour retirer ou insérer au moins un premier composant optique (41, 42, 43, 44) parmi les composants optiques (41, 42, 43, 44, 45) ;
**caractérisé en ce que**
l'ouverture d'accès (50) est formée dans la surface de montage (11) du boîtier (10), et
dans lequel dans un état monté de la tête de traitement au laser (1), le support (30) recouvre l'ouverture d'accès (50).

2. Système de traitement au laser selon la revendication 1, dans lequel la pluralité de composants optiques (41, 42, 43, 44, 45) inclut au moins un second composant optique (45), et
dans lequel une ouverture supplémentaire (56) pour retirer ou insérer le second composant optique (45) est formée dans une surface de boîtier (12) du boîtier (10), dans lequel la surface de boîtier (12) s'étend perpendiculairement à la surface de montage (11) ou est opposée à la surface de montage (11).

3. Système de traitement au laser selon la revendication 2, dans lequel la tête de traitement au laser (1) inclut en outre :
une buse (20), dans lequel le second composant optique (45) est une fenêtre protectrice adjacente à la buse (20) ou est un composant optique le plus proche de la buse (20) ; et/ou
un coupleur de fibre (40) pour coupler une fibre de conduction de lumière laser à la tête de traitement au laser (1), dans lequel le second composant optique (45) est une fenêtre protectrice adjacente au coupleur de fibre (40) ou est un composant optique le plus proche du coupleur de fibre (40).

4. Système de traitement au laser selon la revendication 2 ou 3, dans lequel le second composant optique (45) est un composant optique le plus proche d'un point d'entrée pour permettre à un faisceau laser d'entrer dans le boîtier (10) et/ou est un composant optique le plus proche d'un point de sortie pour permettre à un faisceau laser de sortir du boîtier (10).

5. Système de traitement au laser selon l'une quelconque des revendications précédentes, dans lequel le au moins un premier composant optique (41, 42, 43, 44) inclut au moins un élément parmi : une optique de focalisation (45), une lentille de focalisation, une optique de collimation (42), une lentille de collimation, une fenêtre protectrice (41), un miroir et une optique de mise en forme de faisceau.

6. Système de traitement au laser selon l'une quelconque des revendications précédentes, la tête de traitement au laser (1) incluant en outre :
une unité d'entraînement (42a, 43a) installée sur le boîtier (10) pour déplacer le premier composant optique (42, 43) parallèlement et/ou perpendiculairement à un axe optique dudit premier composant optique (42, 43), et
dans lequel l'unité d'entraînement (42a, 43a) est configurée pour rester installée sur le boîtier (10) lors du retrait du premier composant optique (42, 43) à travers l'ouverture d'accès (50).

7. Système de traitement au laser selon l'une quelconque des revendications précédentes,
dans lequel la surface de montage (11) s'étend dans un plan parallèle à un trajet optique de la tête de traitement au laser (1) à un point d'entrée pour permettre à un faisceau laser d'entrer dans le boîtier (10) ; et/ou
dans lequel la surface de montage (11) s'étend dans un plan parallèle à un trajet optique de la tête de traitement au laser (1) à un point de sortie permettant à un faisceau laser de sortir du boîtier (10) ; et/ou
dans lequel la surface de montage (11) s'étend dans un plan parallèle à un axe optique du premier composant optique (41, 42, 43, 44).

8. Système de traitement au laser selon l'une quelconque des revendications précédentes, dans lequel la surface de montage (11) inclut :
des moyens d'alignement pour aligner la tête de traitement au laser (1) par rapport au support (30) ; et/ou
des moyens de fixation (15) pour fixer la tête de traitement au laser (1) au support (30).

9. Système de traitement au laser selon l'une quelconque des revendications précédentes, dans lequel au moins une surface de boîtier (12) opposée à la surface de montage (11) et/ou au moins une surface de boîtier (12) adjacente à et/ou s'étendant perpendiculairement à la surface de montage (11) est une surface continue.

10. Système de traitement au laser selon l'une quelconque des revendications précédentes, la tête de traitement au laser (1) comportant en outre :
un couvercle d'accès (55) pour ouvrir ou fermer l'ouverture d'accès (50), le couvercle d'accès (55) étant monté sur le boîtier (10) de manière amovible.

11. Système de traitement au laser selon la revendication 10, dans lequel le couvercle d'accès (55) fait partie d'une monture optique ou d'une cartouche comportant le premier composant optique (41, 42, 43, 44) qui est accessible par ladite ouverture d'accès (50).

12. Système de traitement au laser selon l'une quelconque des revendications précédentes,
dans lequel la surface de montage (11) comporte une partie évidée (111, 112) dans laquelle l'ouverture d'accès (50) est formée, la tête de traitement au laser (1) comportant en outre un couvercle d'évidement (115) pour ouvrir ou fermer la partie évidée (111, 112), et/ou
dans lequel la tête de traitement au laser (1) comporte en outre un couvercle de montage (60) couplé de manière articulée à la surface de montage (11), le couvercle de montage (60) incluant des moyens de fixation (65) pour fixer la tête de traitement au laser (1) au support (30).

13. Système de traitement au laser selon l'une quelconque des revendications précédentes, comportant en outre un élément d'étanchéité (33) entre la surface de montage (11) et le support (30).
